# EUROPEAN PATENT SPECIFICATION

(11) **EP 1 944 606 B1**
(45) Date of publication and mention of the grant of the patent: **29.04.2009**
(21) Application number: 07020901.0
(22) Date of filing: 25.10.2007
(51) Int. Cl.: G01N 30/02, C07H 5/02, C07H 13/02, C07H 17/04

(54) **Method of analyzing optical purity of 1-Chloro-3, 5-Ditoluyl-2-Deoxy-L-Ribose using (S)-Tetrahydro-3-Furanol**
Verfahren zur Analyse der optischen Reinheit von 1-Chlor-3, 5-Ditoluyl-2-Deoxy-L-Ribose mit (S)-Tetrahydro-3-Furanol
Procédé d'analyse de la pureté optique du 1-Chloro-3, 5-Ditoluyl-2-Deoxy-L-Ribose utilisant le (S)-Tetrahydro-3-Furanol

(30) Priority: 06.12.2006 KR 20060122751
(43) Date of publication of application: 16.07.2008
(73) Proprietor: Samchully Pharm. Co., Ltd., Gangnam-gu Seoul (KR)
(72) Inventor: Kim, Kyung II, Seongnam-si Gyeonggi-do (KR); Ha, Seung Bum, Seoul (KR); Jeon, Jae, Hoon, Yuseong-gu Daejeon (KR); Kwon, Soon, Jeong, Ansan-si Gyeonggi-do (KR); Kim, Yong, Tae, Daejeon (KR); Yun, Ji Suk, Gimcheon-si Gyeongsanbuk-do (KR)
(74) Representative: Sawodny, Michael-Wolfgang

(56) References cited:
- WO-A-97/31008
- HELM, RICHARD F. ET AL: "Regioselective protection strategies for D- xylopyranosides" JOURNAL OF ORGANIC CHEMISTRY , 56(25), 7015 -21 CODEN: JOCEAH; ISSN: 0022-3263, 1991, XP002483098

## Description

### BACKGROUND OF THE INVENTION

### Field of the invention

The present invention relates to a method of analyzing the optical purity of 1-chloro-3,5-ditoluyl-2-deoxy-L-ribose represented by the following formula 1, and more particularly to a method of analyzing the optical purity of 1-chloro-3,5-ditoluyl-2-deoxy-L-ribose using (S)-tetrahydro-3-furanol:

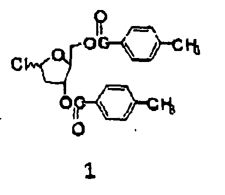

### Description of the Prior Art

Recently, the L-isomers of natural or modified nucleosides have received attention as antiviral agents. L-thymidine, L-3'-thiacytidine (3TC), L-2',3'- dideoxycytidine (L-ddC) and the like exhibit remarkably low toxicity and good antiviral effects, compared to D-nucleosides. Also, L-nucleosides exhibit good effects in antisense oligonucleotide therapy. However, the D-isomers have a remarkably low physiological activity and even reduce the medical effects of the L-isomers. Thus, the optical purity of L-carbohydrates that are major intermediates of L-nucleosides, particularly the optical purity of 1-chloro-3,5-ditoluyl-2-deoxy-L-ribose that is a derivative of 2-deoxy-L-ribose, is very important. Generally, the chemical purity of 1-chloro-3,5-ditoluyl-2-deoxy-L-ribose is analyzed using HPLC after treating the compound with ethanol. However, when 1-chloro-3,5-ditoluyl-2-deoxy-D-ribose is analyzed using HPLC after treating it with ethanol, the L-isomer and the D-isomer are not separated from each other on the chromatogram, and even when it is analyzed by chiral HPLC using a chiral column, the L-isomer and the D-isomer are not clearly separated from each other. Thus, a method of analyzing the optical purity of 1-chloro-3,5-ditoluyl-2-deoxy-L-ribose, which has good resolution, has not yet been reported.

Accordingly, the present inventors have made efforts to analyze the optical purity of 1-Chloro-3,5-ditoluyl-2-deoxy-L-ribose.

From WO/31008 a method of detecting and/or assaying nucleoside hydrolases or nucleoside phosphorylases using a chromogenic substrate is known. Preferred chromogenic substrates mentioned in WO 97/31008 have formula 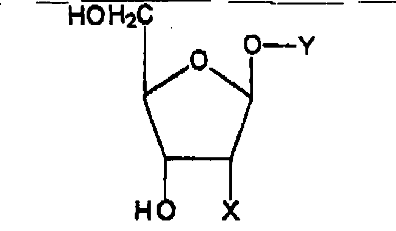 where X is OH, or H, and Y is the residue of Y-OH where Y-OH is a chromophore or a compound readily converted to a chromophore and the substrates are hydrolysed by the nucleoside hydrolase to yield ribose or 2-deoxyribose plus Y-OH. Alternatively those substrates may be phosphorylysed by nucleoside phosphorylase to yield ribose-1-phosphate plus Y-OH. The methods may be used to detect and/or assay parasites in biological samples.

### SUMMARY OF THE INVENTION

Therefore, it is an object of the present invention to provide a method of analyzing the optical purity of 1-chloro-3,5-ditoluyl-2-deoxy-L-ribose, which has excellent resolution.
To achieve the above object, the present invention provides a method of analyzing the optical purity of 1-chloro-3,5-ditoluyl-2-deoxy-L-ribose, the method comprising the steps of: allowing 1-chloro-3,5-ditoluyl-2-deoxy-L-ribose to react with (S)-tetrahydro-3-furanol so as to prepare 1-[(S)-tetrahydro-3-furanol]-3,5-ditoluyl-2-deoxy-L-ribose; analyzing the prepared compound using chiral HPLC; and calculating the content of diastereomer 1-[(S)-tetrahydro-3-furanol]-3,5-ditoluyl-2-deoxy-D-ribose in the prepared compound on the basis of the area ratio of separated peaks on the HPLC chromatogram.

### BRIEF DESCRIPTION OF THE DRAWINGS

The above and other objects, features and advantages of the present invention will be more apparent from the following detailed description taken in conjunction with the accompanying drawings, in which:
FIG. 1 is an HPLC chromatogram obtained according to one embodiment of the analysis method of the present invention (A; 1-[(S)-tetrahydro-3-furanol]-3,5-ditoluyl-2-deoxy-L-ribose; and B: 1-[(S)-tetrahydro-3-furanol]-3,5-ditoluyl-2-deoxy-D-ribose); and
FIG. 2 is an HPLC chromatogram obtained according to anther embodiment of the analysis method of the present invention (A: 1-[(S)-tetrahydro-3-furanol]-3,5-ditoluyl-2-deoxy-L-ribose; and B: 1-[(S)-tetrahydro-3-furanol]-3,5-ditoluyl-2-deoxy-D-ribose).

### DETAILED DESCRIPTION OF THE PREFERRED EMBODIMENTS

Hereinafter, the present invention will be described in detail.

In order to prepare various diastereomeric derivatives and examine the resolution thereof, derivatives of 1-chloro-3,5-ditoluyl-2-deoxy-L-ribose and 1-chloro-3,5-ditoluyl-2-deoxy-D-ribose were prepared using various chiral alcohols, including (S)-2-pentanol, (S)-2-methyl butanol, (S)-1-phenethyl alcohol and (S)-tetrahydro-3-furanol, and then analyzed by HPLC using a reverse-phase C18 column. As a result, the diastereomers were not separated. When the derivatives were analyzed using a chiral column, in the case of the (S)-tetrahydro-3-furanol diastereomers, the peaks of the D- and L- isomers were separated with the highest resolution on the chromatogram, and particularly in the case of (S)-2-pentanol, the diastereomers were not separated. Hereinafter, the method of analyzing the optical purities of diastereomeric derivatives, prepared using (S)-tetrahydro-3-furanol, will be described in further detail.

### Preparation of analytical samples of diastereomeric derivatives

2 g of 1-chloro-3,5-ditoluyl-2-deoxy-L-ribose or 1-chloro-3,5-ditoluyl-2-deoxy-D-ribose is completely dissolved in 10 g of (S)-tetrahydro-3-furanol, and 2 g of ethanol was added thereto. The solution is stirred for 10 minutes, concentrated, and then azeotropically distilled with toluene. The resulting material is diluted in 50 ml of ethyl acetate and is washed two times with 50 ml of water and dried with sodium sulfate, and then the solvent is removed by concentration. 1 mg of the residue is diluted in 5-10 ml of ethanol. Herein, the (S)-tetrahydro-3-furanol used as a chiral auxiliary contains a trace amount of (R)-tetrahydro-3-furanol. Thus, in order to obtain precise analysis results, analytical samples are also prepared using (R)-tetrahydro-3-furanol according to the above-described preparation process.

### HPLC analysis conditions

As an analysis column, a chiral column (for example, Daicel Chiralpak AD-H (4,6 cm I.D. x 25 cm) packed with silica gel coated with amylose-tris (3,5-dimethylphenyl carbamate) is used, 20 µl of a sample is injected at a column temperature of 40 □ and a detector wavelength of 240 nm, and the column is eluted using alcohol/heptane (30/70 (v/v%)) as mobile phases at a flow rate of 0.5 ml/min.

### Analysis results

The (S)-tetrahydro-3-furanol derivative of 1-chloro-3,5-ditoluyl-2-deoxy-L-ribose and the (S)-tetrahydro-3-furanol derivative of 1-chloro-3,5-ditoluyl-2-deoxy-D-ribose are diastereometic to each other and clearly separated on the chromatogram. The retention times of the respective peaks are 16.9 min and 17.4 min for 1-[(S)-tetrahydro-3-furanol]-3,5-ditoluyl-2-deoxy-L-ribose, and 18.6 min and 19.3 min for 1-[(S)-tetrahydro-3-furanol]-3,5-ditoluyl-2-deoxy-D-ribose.
Herein, why each of the diastereomers shows two peaks is that it is an alpha/beta mixture. In order to examine the effect of a trace amount of (R)-tetrahydro-3-furanol, contained in chral auxiliary (S)-tetrahydro-3-furanol, on analysis results, the (R)-tetrahydro-3-furanol derivative of 1-chloro-3,5-ditoluyl-2-deoxy-L-ribose and the (R)-tetrahydro-3-furanol derivative of 1-chloro-3,5-ditoluyl-2-deoxy-D-ribose were analyzed. As a result, the diastereomers were separated on the chromatogram, and the retention times of the respective peaks were 17.0 min for 1-[(R)-tetrahydro-3-furanol]-3,5-ditoluyl-2-deoxy-L-ribose, and 15.7 min and 24.6 min for 1-[(R)-tetrahydro-3-furanol]-3,5-ditoluyl-2-deoxy-D-ribose.

**Table 1: Retention times of diastereomers**

| | 1-chloro-3.5-ditoluyl-2-deoxy-L-ribose | 1-chloro-3,5-ditoluyl-2-deoxy-D-ribose |
|---|---|---|
| (S)-tetrahydro-3-furanol | 16.9 min and 17.4 min | 18.6 min and 19.3 min |
| (R)-tetrahydro-3-furanol | 17.0 min | 15.7 min and 24.6 min |

As described above, because the peak (17.0 min) of 1-[(R)-tetrahydro-3-furanol]-3,5-ditoluyl-2-deoxy-L-ribose, produced by the reaction of 1-chloro-3,5-ditoluyl-2-deoxy-L-ribose with a trace amount of (R)-tetrahydro-3-furanol, contained in (S)-tetrahydro-3-furanol, overlaps with the peaks (16.9 min and 17.4 min) of 1-[(S)-tetrahydro-3-furanol]-3,5-ditoluyl-2-deoxy-L-ribose, all the peaks on the chromatogram may be integrated. On the other hand, two peaks (15.7 min and 24.6 min) of 1-[(R)-tetrahydro-3-furanol]-3,5-ditoluyl-2-deoxy-D-ribose, produced by the reaction of (R)-tetrahydro-3-furanol with 1-chloro-3,5-ditoluyl-2-deoxy-D-ribose, will not be theoretically problematic, when the optical purity of (S)-tetrahydro-3-furanol is high. This is because, if (R)-tetrahydro-3-furanol is present in (S)-tetrahydro-3-furanol in an amount of 1%, and 1-chloro-3,5-ditoluyl-2-deoxy-D-ribose is present in 1-chloro-3,5-ditoluyl-2-deoxy-L-ribose in an amount of 1%, calculative HPLC error for two peaks (alpha and beta) of 1-[(R)-tetrahydro-3-furanol]-3,5-ditoluyl-2-deoxy-D-ribose is 1/100*1/100*1/2, that is 1/20000. Thus, if the optical purity of (S)-tetrahydro-3-furanol as a chiral auxiliary is at least 99.0% ee, it can be used as an analytical method.

### Detection limit

The detection limit of (8)-tetrahydro-3-furanol, as a chiral auxiliary is examined in the following manner.
1) Preparation of solution A: 25.79 mg of 1-[(S)-tetrahydro-3-furanol]-3,5-ditoluyl-2-deoxy-L-riboBe is added and filled with ethanol in a 100-ml volumetric flask up to the marked line.
2) Preparation of solution B: 24.30 mg of 1-[(S)-tetrahydro-3-furanol]-3,5-ditoluyl-2-deoxy-D-ribose is added and filled with ethanol in a 100-ml volumetric flask up to the marked line.

The solutions A and B are placed in an incubator at 30 □, and mixed with each other at a given ratio, and the area ratio (%) between the HPLC peaks of the solutions is examined.

**Table 2: HPLC peak area at various solution ratios**

| Solution A /solution B (g/g%) | B content (theoretical; area %) | HPLC analysis results (area %) |
|---|---|---|
| 4.26371/0.02662 | 0.62% | 0.77% |
| 3,56354/0.08029 | 2.20% | 2.40% |
| 4.13280/0.15152 | 3.54% | 3.77% |

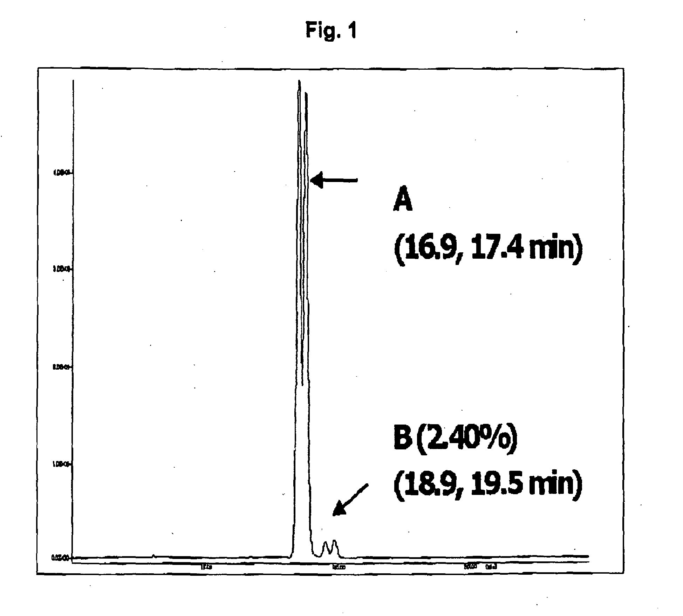

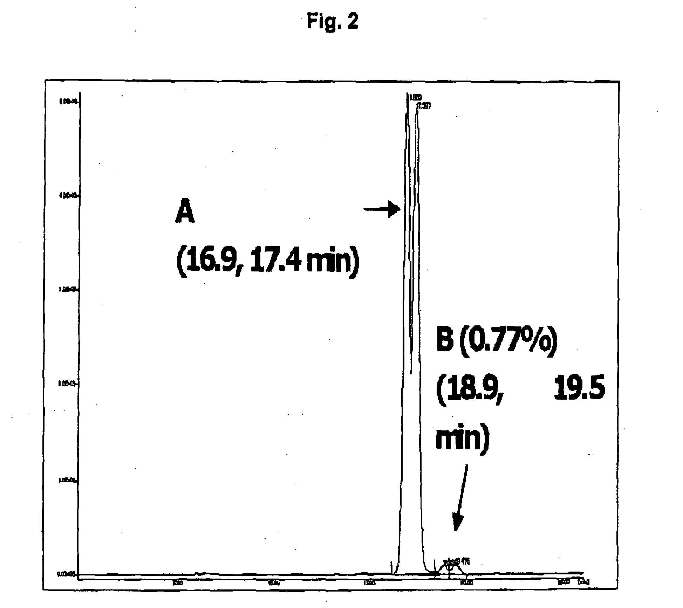

As can be seen from the results in Table 2 above, the content of the diastereomer can be determined on the basis of the ratio of peak areas on the HPLC chromatogram, even though an error occurs due to the accuracy of the standard sample. That is, the optical purity of 1-chloro-3,5-ditoluyl-2-deoxy-L-ribose can be analyzed by allowing (S)-tetrahydro-3-furanol, having an ee value of at least 99%, to react with 1-chloro-3,5-ditoluyl-2-deoxy-L-ribose, to prepare 1-[(S)-tetrahydro-3-furanol]-3,5- ditoluyl-2-deoxy-L-ribose, analyzing the prepared compound by chiral HPLC, and calculating the content of diastereomer 1-[(S)-tetrahydro-3-furanol]-3,5-ditoluyl-2-deoxy-D-ribose in the compound on the basis of the area ratio of separated peaks on the HPLC chromatogram (see FIGS. 1 and 2).

The present inventors also actually analyzed the content of 1-chloro-3,5-ditoluyl-2-deoxy-D-ribose of less than 0.1% in 1-chloro-3,5-ditoluyl-2-deoxy-L-ribose using the above optical purity analytical method.

As described above, according to the analytical method of the present invention, the optical purity of 1-chloro-3,5-ditoluyl-2-deoxy-L-ribose can be analyzed with excellent resolution.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A method of analyzing the optical purity of 1-chloro-3,5-ditoluyl-2-deoxy-L-ribose, the method comprising the steps of: allowing 1-chloro-3,5-ditoluyl-2-deoxy-L-ribose of the following formula 1 to react with (S)-tetrahydro-3-furanol of the following formula 2 so as to prepare 1-[(S)-tetrahydro-3-furanol]-3,5-ditoluyl-2-deoxy-L-ribose of the following formula 3; analyzing the compound of formula 3 using chiral HPLC; and calculating the content of diastereomer 1-[(S)-tetrahydro-3-furanol] -3,5-ditoluyl-2-deoxy-D-ribose of the following formula 4 in the compound of formula 3 on the basis of the area ratio of separated peaks on the HPLC chromatogram: 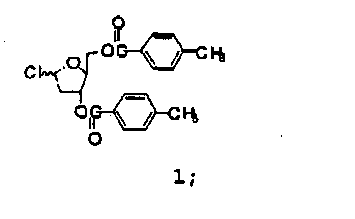 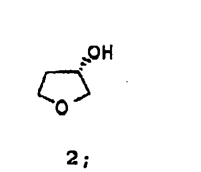 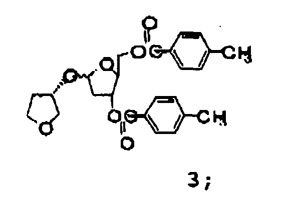 and

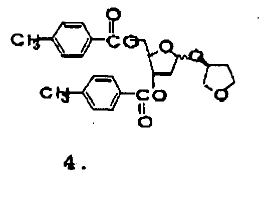

2. The method of claim 1, wherein the (S)-tetrahydro-3-furanol has an optical purity of more than 99.0% ee.

3. The method of claim 1, wherein the chiral HPLC is carried out using a chiral column packed with silica gel coated with amylose-tris (3,5-dimethylphenyl carbamate),

## Patentansprüche

1. Verfahren zur Analyse der optischen Reinheit von 1-Chlor-3,5-ditoluyl-2-deoxy-L-ribose, wobei das Verfahren die Schritte umfasst: Umsetzen der 1-Chlor-3,5-ditoluyl-2-deoxy-L-ribose der folgenden Formel 1 mit (S)-Tetrahydro-3-furanol der folgenden Formel 2, um 1-[(S)-Tetrahydro-3-furanol]-3,5-ditoluyl-2-deoxy-L-ribose der folgenden Formel 3 herzustellen; Analysieren der Verbindung der Formel 3 unter Verwendung chiraler HPCL; und Berechnen des Gehaltes des Diastereomers 1-[(S)-Tetrahydro-3-furanol]-3,5-ditoluyl-2-deoxy-D-ribose der folgenden Formel 4 in der Verbindung der Formel 3 auf der Basis des Flächenverhältnisses diskreter Peaks im HPCL-Chromatogramm: 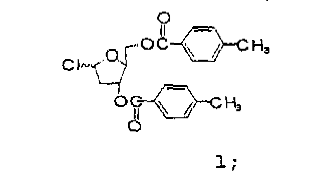 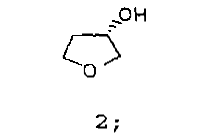 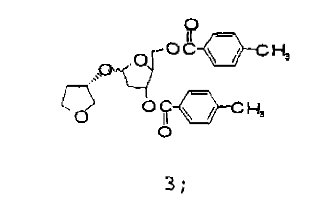 und

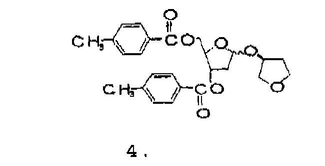

2. Verfahren nach Anspruch 1, worin (S)-Tetrahydro-3-furanol eine optische Reinheit von mehr als 99,0% ee aufweist.

3. Verfahren nach Anspruch 1, worin die chirale HPLC durchgeführt wird unter Verwendung einer chiralen Säule, gepackt mit Silicagel, beschichtet mit Amylose-tris-(3,5-dimethylphenylcarbamat).

## Revendications

1. Procédé pour analyser la pureté optique du 1-chloro-3,5-ditoluyl-2-déoxy-L-ribose, le procédé comportant les étapes suivantes : permettre au 1-chloro-3,5-ditoluyl-2-déoxy-L-ribose de la formule 1 suivante de réagir avec le (S)-tétrahydro-3-furanol de la formule 2 suivante de manière à préparer du 1-[(S)-tétrahydro-3-furanol]-3,5-ditolyl-2-déoxy-L-ribose de la formule 3 suivante ; analyser le corps composé de la formule 3 en utilisant la HPLC chirale ; et calculer la quantité de diastéréomère 1-[(S)-tétrahydro-3-furano]-3,5-ditoluyl-2-déoxy-D-ribose de la formule 4 suivante dans le corps composé de formule 3 sur la base du rapport de section de pics séparés sur le chromatogramme HPLC : 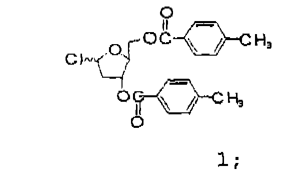 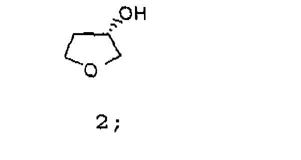 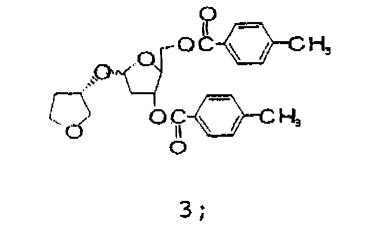 et

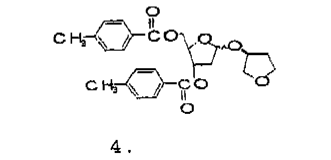

2. Procédé selon la revendication 1, où le (S)-tétrahydro-3-furanol a une pureté optique de plus de 99,0 % ee.

3. Procédé selon la revendication 1, où la HPLC chirale est réalisé en utilisant une colonne chirale remplie de gel de silice enrobée d'amylose tris (3,5-diméthylphénylcarbamate).
